(19) Europäisches Patentamt
European Patent Office
Office européen des brevets

(11) Publication number: 0 090 117 A1

# (12) EUROPEAN PATENT APPLICATION

(21) Application number: 82306323.5

(22) Date of filing: 26.11.82

(51) Int. Cl.³: C 07 C 93/04, D 06 M 13/46

(30) Priority: 09.12.81 GB 8137185

(43) Date of publication of application: 05.10.83 Bulletin 83/40

(84) Designated Contracting States: BE DE FR GB IT NL

(71) Applicant: IMPERIAL CHEMICAL INDUSTRIES PLC, Imperial Chemical House Millbank, London SW1P 3JF (GB)

(72) Inventor: Nelson, Charles Russell, 9 Downfield Way New Marske, Redcar Cleveland (GB)

(74) Representative: Martin, David Lincoln et al, Imperial Chemical Industries PLC Legal Department: Patents Thames House North Millbank, London SW1P 4QG (GB)

## (54) Alkoxylated quaternary ammonium salts.

(57) Quaternary ammonium salts $R_1R_2R_3N^+ (AO)_nHX^-$ where $R_1$ is long chain alkyl, most preferably $C_{13}$ to $C_{17}$, $R_2$ and $R_3$ are preferably short chain alkyl, for example methyl, AO is alkylene oxide or mixed alkylene oxides, for example ethylene oxide and/or propylene oxide and/or butylene oxide, $0 < n \leq 30$, n being preferably in the range 1 to 8, and X is an anion, are described. The preferred $C_{13}/C_{15}/C_{17}$ compositions are liquid at ambient temperature and coldwater dispersible. They are very suitable for use in fabric conditioning compositions (with active levels above 10% w/w attainable), sugar clarification and in the preparation of bentone gellants.

EP 0 090 117 A1

ACTORUM AG

Organic Nitrogen Compounds

THE PRESENT INVENTION relates to novel organic nitrogen compounds, their preparation and uses. In particular, the invention relates to novel quaternary ammonium salts and their uses.

Quaternary ammonium compounds are well-known and the patent and technical literature contains many references to the preparation and uses of many such compounds. Among the more common uses for some quaternary ammonium compounds is the conditioning of textile fabrics of one sort or another. Fabric conditioning is usually achieved by one of the following techniques viz

the use of a combined detergent/conditioner in the wash cycle;

addition of the fabric conditioner to the fabric in the 'hot air drier'; or

addition of the fabric conditioner to the fabric in the cold water rinse at the end of the wash cycle.

Commercial fabric conditioner formulations used in the cold water rinse are normally based on a difatty dimethyl quaternary ammonium salt, for example dihydrogenated tallow dimethyl quaternary ammonium chloride (DTDMQC), distearyl dimethyl quaternary ammonium chloride etc. Although these formulations convey a satisfactory soft feel to treated fabric there are a number of disadvantages associated with the DTDMQC type of fabric conditioner active component. DTDMQC is normally sold at a 75% active level in a mixed solvent system. It is a paste at normal ambient temperatures and therefore requires heated storage. Manufacturers of fabric conditioner formulations also experience difficulty in preparing storage-stable aqueous dispersions of DTDMQC. Although the difficulty can be overcome at low active levels, for example 6% w/w, using a combination of high shear mixing and electrolytes both the water and DTDMQC have to be warmed to temperatures in excess of $50^{\circ}C$ before mixing. Formulations containing DTDMQC active levels above 10% w/w tend to be very viscous. Repeated use of fabric conditioner formulations based on DTDMQC also leads to a build-up in the hydrophobic nature of treated fabric. This hydrophobicity gives the fabric a 'greasy' feel and interferes with the absorption of

moisture. The latter effect is a significant disadvantage for towels, babies' nappies etc.

Difatty dimethyl quaternary ammonium salts such as DTDMQC also find use in the clarification of cane sugar liquor and in ion-exchanging bentonite clays to form bentone gellants. The fact that these salts are pastes with poor water dispersibility is a disadvantage in both of these applications.

There is a need, therefore, for a quaternary ammonium salt which possesses one or more of the following characteristics, viz., it is liquid at normal ambient temperatures, is dispersible in cold water (say at less than 30°C), is suitable for fabric conditioning without producing a build-up in the hydrophobic nature of the treated fabric, is easier to formulate at active levels above 10% w/w than compounds such as DTDMQC, and is suitable for other uses.

Qauternary ammonium salts according to the invention are defined by the formula

$$\left[ R_1 - \overset{\displaystyle R_2}{\underset{\displaystyle R_3}{\overset{|}{\underset{|}{N^+}}}} - (AO)_n\,H \right] X^- \qquad (I)$$

where $R_1$ comprises a long chain alkyl group containing from 8 to 24, preferably 12 to 20 carbon atoms, more preferably 13 to 17 carbon atoms; $R_2$ comprises an alkyl group containing from 1 to 20 carbon atoms, preferably 1 to 6 carbon atoms, and is more preferably methyl; $R_3$ comprises a lower alkyl group containing from 1 to 4 carbon atoms or comprises hydroxyalkyl for example hydroxyethyl; AO represents an alkylene oxide or mixed alkylene oxides, for example ethylene oxide, propylene oxide, butylene oxide; $0 < n \leqslant 30$; and X is an anion.

In preferred embodiments of this invention, the substituent $R_1$ comprises a long chain alkyl group or mixtures thereof containing 13 or 15 carbon atoms, the groups being both straight chain and branched, the amount of branching being in the range 30 to 70%.

In more preferred embodiments of this invention the substituent $R_1$ represents a mixture of long chain alkyl groups containing 13 or 15 carbon atoms comprising approximately 65 to 75% $C_{13}$ groups with approximately 35 to 25% $C_{15}$ groups (the percentages

being calculated on the total of long chain alkyl groups) with approximately 40 to 55% w/w straight chain to 60 to 45% w/w 2-alkyl branched chain where the 2-alkyl group is predominantly methyl.

Preferred quaternary ammonium salts according to this invention include those for formula I in which in the substituent $(AO)_n$ the value of n is in the range 1 to 8. Such preferred salts include those where AO represents both one and more than one alkylene oxide and where such mixed alkylene oxide groups are present, their total number is in the range 1 to 8. For example, the Applicants have found that in compounds containing a mixture of ethylene oxide (EO) and propylene oxide (PO) groups, those having a greater proportion of PO groups, for example in a ratio of 6PO to 2EO groups, are preferred for uses such as sugar clarification and fabric softening.

Quaternary ammonium salts according to this invention can be prepared by several methods, for example by alkoxylation of a tertiary amine salt ($R_1 R_2 R_3 \overset{+}{N}H X^-$), and preferably by alkoxylation of a secondary amine ($R_1 R_2 NH$) followed by quaternisation of the resulting tertiary amine with the quaternisation agent $R_3X$ where $R_1$, $R_2$, $R_3$ and X are as defined hereinbefore. A particularly preferred secondary amine is a mixture of amines known as "Synprolam" 35M (Registered Trade Mark) where $R_1$ is a mixture of $C_{13}$ and $C_{15}$ alkyl groups and $R_2$ is methyl.

Preferred embodiments of the quaternary ammonium salts according to this invention are liquid at normal ambient temperatures, are dispersible in cold water, can be readily formulated into compositions, for example fabric conditioning compositions, at active levels above 10% w/w.

Quaternary ammonium compounds according to this invention may be used with or without a solvent, for example isopropanol/water. They are suitable for use in fabric conditioning, in the clarification of cane sugar liquor and in ion-exchanging bentonite clays to form bentone gellants.

The invention is further illustrated by the following Examples.

EXAMPLE 1

A mixture of $C_{13}/C_{15}$ amines, known as "Synprolam" 35M (1 mole)

and potassium hydroxide (0.5% w/w on amine) was charged to an alkoxylation vessel, purged with nitrogen and the vessel evacuated. The mixture of $C_{13}/C_{15}$ amines contained approximately 70% $C_{13}$ and approximately 30% $C_{15}$ amines with 96% of secondary amines (with the $R_2$ substituent as shown in formula I, being predominantly methyl) and 3% primary and tertiary amines. Residual water was removed under reduced pressure at 110°C and the temperature raised to 140°C. Ethylene oxide (5 mole) was added over several hours maintaining a maximum reaction pressure of 50 psig. The temperature was maintained at 140°C for a further hour and the reaction product, designated Synprolam 35MX5, then allowed to cool to 25°C. The product was 98% amine ethoxylate with an average ethoxyl content of 5 mole and 2% non-amine material. (The product was of formula $R_1 R_2N(AO)_nH$, where $R_1$ was $C_{13}/C_{15}$, $R_2$ was methyl, AO was ethylene oxide and n was, on average, 5.)

EXAMPLE 2

Synprolam 35MX5 (90g, 0.2 mole) prepared as in Example 1, methyl chloride (10.09g, 0.2 mole) and isopropanol (12g) were warmed at 105°C for 4 hours. The resulting liquid product, designated Synprolam 35MX5QC, was purged with nitrogen and analysed as 85% w/w of the corresponding quaternary ammonium salt in which, referring to formula I, $R_3$ was methyl and 4% w/w amine plus amine salt. The solvent was removed under reduced pressure to give Synprolam 35 MX5QC (100% active) which was a liquid at normal ambient temperature.

EXAMPLE 3

A series of quaternary ammonium chlorides were prepared following the procedures outlined in Examples 1 and 2. A quaternary ammonium sulphate was also prepared for comparison. Relevant information on each of these products is given in Table 1.

TABLE 1

| Product | Quaternary Ammonium Salt [1] | | | Total Active Level [2] (% w/w) | Appearance at 20°C |
|---|---|---|---|---|---|
| | p | q | X | | |
| Synprolam 35MX8QC | 8 | 0 | Cl | 100 | liquid |
| Synprolam 35MX4P1QC | 4 | 1 | Cl | 100 | liquid |
| Synprolam 35MX2P3QC | 2 | 3 | Cl | 100 | liquid |
| Symprolam 35MX2P6QC | 2 | 6 | Cl | 100 | liquid |
| Synprolam 35MX2P6QS | 2 | 6 | $CH_3SO_4$ | 100 | liquid |

1. Qauternary ammonium salts are defined by the formula:

$$\left[ R_1 - \overset{\displaystyle CH_3}{\underset{\displaystyle CH_3}{\overset{|}{\underset{|}{N^+}}}} - (EO)_p\ (PO)_q\ H \right] \qquad X^-$$

where $R_1$ is a long chain alkyl containing 13 or 15 carbon atoms; EO is $CH_2CH_2O$; PO is $CH_2CH(CH_3)O$ or $CH(CH_3)CH_2O$; and X is an anion.

2. Total active level is [Qauternary ammonium salt] + [Amine] + [Amine Salt].

The cold water dispersibility of each of the quaternary ammonium salts listed in Table 1 was compared to that of dihydrogenated tallow dimethyl quaternary ammonium chloride (DTDMQC) using the following test method.

TEST METHOD

Any solvent present in the quaternary ammonium salt composition is first removed under reduced pressure. The resulting quaternary ammonium salt (100% active) is warmed to 25°C and then dispersed in demineralised water, also at 25°C, by stirring at 300RPM with a paddle stirrer for five minutes. The appearance of the resulting mixture, containing 6% w/w quaternary ammonium salt, is noted according to the scale

0 = quaternary ammonium salt not dispersed

1 = quaternary ammonium salt partially dispersed, some lumps still remaining

2 = quaternary ammonium salt fully dispersed

The test is then repeated with (1) quaternary ammonium salt at 50°C and demineralised water at 25°C (2) quaternary ammonium salt at 25°C and demineralised water at 50°C (3) quaternary ammonium salt at 50°C and demineralised water at 50°C, if the quaternary ammonium salt at 25°C did not disperse in demineralised water at 25°C.

The results obtained are given in Table 2.

TABLE 2

| Product | Temperature (°C) | | Appearance after 5 minutes |
|---|---|---|---|
| | Quaternary Ammonium Salt | Water | |
| Synprolam 35MX8QC | 25 | 25 | 2 |
| Synprolam 35MX4P1QC | 25 | 25 | 2 |
| Synprolam 35MX2P3QC | 25 | 25 | 2 |
| Synprolam 35MX2P6QC | 25 | 25 | 2 |
| Synprolam 35MX2P6QS | 25 | 25 | 2 |
| DTDMQC | 25 | 25 | 0 |
| | 50 | 25 | 1 |
| | 25 | 50 | 0 |
| | 50 | 50 | 1 |

Clearly, these quaternary ammonium salts, embodiments of the present invention, are not only liquid but are readily dispersible in cold water, a considerable advantage over the comparable DTDMQC composition.

EXAMPLE 4

Each of the quaternary ammonium salts listed in Table 2 was dispersed in water to give a total active level of 6% w/w and assessed for fabric softening using the following test method.

TEST METHOD

The fabric (cotton towelling) to be treated is first desized by a 5 minute wash at 50°C using 'Drive' soap powder (4g powder per 3 litres of wash water and 30 litres wash water per Kg of fabric). The fabric is then given 4 cold water rinses lasting 1½ minutes each and spin dried for 3 minutes. The fabric is finally dried in a tumbler drier for 90 minutes.

The fabric is treated using 20g of the quaternary ammonium salt dispersion (6% w/w active level) per 30 litres of water and stirring for 5 minutes at 25°C. The fabric is then dried in the spin drier for 3 minutes and finally in the tumbler drier as described above.

Each piece of fabric is compared to untreated fabric (viz fabric subjected to the above test method without the quaternary ammonium salt being present in the cold water rinse) using the standard paired comparison test method. All of the quaternary ammonium salts studied imparted a soft feel to the treated fabric.

EXAMPLE 5

Each of the quaternary ammonium salts listed in Table 2 was assessed for 'rewettability'. 'Rewettability' is a measure of the hydrophobic nature of treated fabric and is determined using the following test method.

TEST METHOD

For each quaternary ammonium salt, a piece of fabric (cotton towelling, 2' by 1' i.e. approximately 61cm x 30.5 cm) is desized and treated according to the procedure described in Example 4. The procedure is repeated twice more. Three strips (25cm by 4cm) are cut from the treated fabric and weighted at the bottom with 5cm lengths of glass rod. The bottom 3cm of the fabric are then immersed in a 0.18% w/v aqueous solution of "Lissamine" Red 2G (Registered Trade Mark). The height travelled by the dye solution in 30 minutes is recorded and the mean taken for the three strips. This mean is then compared to that obtained for untreated fabric (viz. fabric subjected to the above test method without the quaternary ammonium salt being present in the cold water rinse). 'Rewettability' is calculated as follows:

$$\text{REWETTABILITY} = \frac{\text{MEAN [TREATED FABRIC]}}{\text{MEAN [UNTREATED FABRIC]}} \times 100\%$$

TABLE 3

| PRODUCT | REWETTABILITY |
|---|---|
| Untreated | 100 |
| Synprolam 35MX8QC | 101 |
| Synprolam 35MX4P1QC | 100 |
| Synprolam 35MX2P3QC | 102 |
| Synprolam 35MX2P6QC | 102 |
| Synprolam 35MX2P6QS | 100 |
| DTDMQC | 75 |

The results in Table 3 indicate that quaternary ammonium salts according to the invention do not lead to a build up in the hydrophobic nature of treated fabric in contrast to DTDMQC.

EXAMPLE 6

Each of the quaternary ammonium salts listed in Table 1 was dispersed in water to give a total active level at 50% w/w. The resulting dispersions were free-flowing liquids.

EXAMPLE 7 - SUGAR CLARIFICATION

A 65% w/w sugar solution was prepared by warming London Demerara sugar in water at 75°C. This solution was then split into 5 samples. The first sample was treated as a blank. 1000 ppm (based on sugar) of a quaternary ammonium salt was added to each of the remaining samples. After stirring for 5 minutes, the pH of each sample was adjusted to 7.0 with sodium hydroxide and each sample filtered through a 450nm "Millipore" sieve. The optical density for each sample was then determined at 420nm using a 1cm cell. The results obtained are given in Table 4.

## TABLE 4

| Sample | QUATERNARY AMMONIUM SALT [1] | | | | | Optical Density [4] |
|---|---|---|---|---|---|---|
| | Type | Concentration [2] (PPM) | p | q | Propylene Oxide [3] (% w/w) | |
| 1 | Blank | - | - | - | - | 2.82 |
| 2 | Synprolam 35MX8QC | 1000 | 8 | 0 | 0 | 2.26 |
| 3 | Synprolam 35MX4P1QC | 1000 | 4 | 1 | 24 | 1.94 |
| 4 | Synprolam 35MX2P3QC | 1000 | 2 | 3 | 66 | 1.74 |
| 5 | Synprolam 35MX2P6QC | 1000 | 2 | 6 | 79 | 1.60 |

NB 1. Qauternary ammonium salts are defined by the formula

$$\left[ R_1 - \overset{\displaystyle CH_3}{\underset{\displaystyle CH_3}{\overset{|}{\underset{|}{N^+}}}} - (EO)_p\,(PO)_q\,H \right] Cl^-$$

where $R_1$ is a long chain alkyl group containing 13 or 15 carbon atoms; EO is $CH_2CH_2O$; and PO is $CH_2CH(CH_3)O$ or $CH(CH_3)CH_2O$.

2. Concentration of quaternary ammonium salt based on sugar
3. Percentage refers to portion of polyether chain derived from propylene oxide
4. Optical density measured at 420nm using a 1cm cell.

The results in Table 4 indicate that quaternary ammonium salts according to the invention can be used in the clarification of sugar cane liquor. Clarification can be improved by increasing the percentage of the polyether chain derived from propylene oxide.

Claims

1. A quaternary ammonium salt defined by the formula

$$\left[ \begin{array}{c} R_2 \\ | \\ R_1 - N^+ - (AO)_n H \\ | \\ R_3 \end{array} \right] X^-$$

where $R_1$ comprises a long chain alkyl group containing from 8 to 24 carbon atoms; $R_2$ comprises an alkyl group containing from 1 to 20 carbon atoms; $R_3$ comprises a lower alkyl group containing from 1 to 4 carbon atoms or hydroxyalkyl; AO represents an alkylene oxide or mixed alkylene oxides; $0 < n \leqslant 30$; and X is an anion.

2. A quaternary ammonium salt as claimed in claim 1 in which $R_1$ comprises an alkyl group containing from 13 to 17 carbon atoms; $R_2$ comprises an alkyl group containing from 1 to 6 carbon atoms; and $R_3$ comprises hydroxyalkyl or a lower alkyl group containing 1 to 4 carbon atoms.

3. A quaternary ammonium salt as claimed in claim 1 or 2 in which the substituent $R_1$ comprises a long chain alkyl group or mixtures thereof containing 13 or 15 carbon atoms, the groups being both straight chain and branched, the amount of branching being in the range 30 to 70%.

4. A quaternary ammonium salt as claimed in any one of claims 1 to 3 in which the substituent $R_1$ represents a mixture of long chain alkyl groups containing 13 or 15 carbon atoms comprising approximately 65 to 75% $C_{13}$ groups with approximately 35 to 25% $C_{15}$ groups (the percentages being calculated on the total of long chain alkyl groups) with approximately 40 to 55% w/w straight chain to 60 to 45% w/w 2-alkyl branched chain where the 2-alkyl group is predominantly methyl.

5. A quaternary ammonium salt as claimed in any one of the preceding claims in which in the substituent $(AO)_n$ the value of n is in the range 1 to 8.

6. A quaternary ammonium salt as claimed in claim 5 in which AO represents a mixture of both ethylene oxide and propylene oxide groups, the total number of such oxide groups being in the range 1 to 8.

7. A liquid composition comprising a quaternary ammonium salt as claimed in any one of claims 1 to 6.

8. A liquid composition as claimed in claim 7 comprising a solution in a liquid solvent of a quaternary ammonium salt as claimed in any one of claims 1 to 6.

DLM/CB

European Patent Office

# EUROPEAN SEARCH REPORT

0090117

Application number

EP 82 30 6323

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,X | EP-A-0 049 017 (AKZO N.V.)<br>* Examples 3, 4, 6, 15, 17; claims *<br>--- | 1,5,7, 8 | C 07 C 93/04<br>D 06 M 13/46 |
| X | EP-A-0 013 820 (ICI)<br>* Claims *<br>--- | 1,5,7, 8 | |
| X | DE-A-2 250 133 (CASSELLA FARBWERKE)<br>* Examples 1-7 *<br>--- | 1-8 | |
| A | GB-A-1 055 128 (WITCO CHEMICAL CO. INC.)<br>* Examples 4, 8 *<br>----- | 1-8 | |

TECHNICAL FIELDS SEARCHED (Int. Cl. ³)

C 07 C 93/04
D 06 M 13/46

The present search report has been drawn up for all claims

| Place of search | Date of completion of the search | Examiner |
|---|---|---|
| BERLIN | 03-03-1983 | BREW C.H. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document

EPO Form 1503. 03.82